# FASCICULE DE BREVET EUROPEEN

(11) **EP 2 490 488 B1**
(45) Date de publication et mention de la délivrance du brevet: **25.06.2014**
(21) Numéro de dépôt: 12155770.6
(22) Date de dépôt: 16.02.2012
(51) Int. Cl.: H04W 52/02

(54) **Procédé et dispositif de communication en champ proche et programme d'ordinateur correspondant.**
Verfahren und Vorrichtung zur Nahfeldkommunikation, und entsprechendes Computerprogramm
Method and device for near-field communication and corresponding computer program.

(30) Priorité: 18.02.2011 FR 1151368
(43) Date de publication de la demande: 22.08.2012
(73) Titulaire: Kerlink, 35700 Rennes (FR)
(72) Inventeur: Brient, Vincent, 35140 SAIN-OUEN-DES-ALLEUX (FR); Delibie, Yannick, 35235 THORIGNE-FOUILLARD (FR)
(74) Mandataire: Le Noane, Karine

(56) Documents cités:
- EP-A1- 1 596 537
- WO-A1-01/63888
- WO-A1-2005/038696
- WO-A1-2005/054609

## Description

### 1. Domaine de l'invention

Le domaine de l'invention est celui des communications en champ proche, mettant en oeuvre des lecteurs de communication en champ proche et des objets nomades, tels que des cartes à puce sans contact de type RFID (pour radio-identification, ou « Radio Frequency IDentification» en anglais) ou des étiquettes NFC (pour communication en champ proche ou « Near Field Communication » en anglais), pour échanger des données.

En particulier, l'invention trouve des applications dans les systèmes de partage, ou d'accès libre-service, de véhicules (voiture, vélo, bus, etc), d'objets (clés de véhicule, biens de consommation courante) disponibles (notamment à l'achat ou à la location) dans un distributeur, ou les systèmes de contrôle d'accès à une zone géographique (par exemple une zone sécurisée située en extérieur) dont l'accès est limité aux porteurs d'une carte à puce RFID ou d'une étiquette NFC.

### 2. Art antérieur

Les systèmes de partage, ou d'accès libre-service, de véhicules connaissent un essor considérable à l'heure actuelle.

Le principe de fonctionnement de ces systèmes repose sur l'utilisation d'un lecteur de communication en champ proche, de type RFID ou NFC, placé sur ou à l'intérieur du véhicule, et de cartes à puces compatibles portées par les usagers autorisés. Ces cartes à puce contiennent par exemple des informations concernant l'abonnement de l'utilisateur, ses droits, ses coordonnées, .... Lorsqu'un usager souhaite utiliser un tel véhicule, il approche sa carte à puce du lecteur, déclenchant ainsi l'autorisation d'accès et le déverrouillage du véhicule si toutes les conditions sont remplies (abonnement en vigueur, véhicule disponible, etc).

Un inconvénient de cette technique de l'art antérieur réside dans la consommation d'énergie du lecteur de communication en champ proche, qui doit être actif en permanence pour pouvoir lire, à tout moment, une carte d'usager souhaitant accéder à un véhicule. Les lecteurs RFID actuellement disponibles sur le marché consomment par exemple entre 10mA et 250mA lorsqu'ils sont en attente de lecture d'une carte.

Cette forte consommation est particulièrement préjudiciable pour les applications alimentées par batterie, par exemple pour la location de véhicules électriques ou non (comme une voiture ou un vélo), stationnés dans l'attente d'une location.

En effet, cette consommation du lecteur RFID participe pour beaucoup à la décharge de la batterie du véhicule, ce qui nuit à la qualité du service rendu car les batteries des véhicules peuvent se trouver déchargées au moment de leur location, si le véhicule est resté plusieurs jours en attente de location. Cela augmente également fortement les coûts de gestion du parc de véhicules disponibles, car une vérification plus fréquente de l'état de charge des batteries est nécessaire, ainsi qu'une recharge également plus fréquente des batteries.

Le document WO 2005/054609 décrit un système d'ouverture/fermeture à distance d'un véhicule dans lequel l'alimentation de verrou, i.e. lecteur RFID, est activé par la détection de la présence à proximité de la clé, au travers de l'émission RFID. Une fois activé, le verrou et la clé échangent des données grâce auxquelles l'utilisateur est autorisé ou non d'accéder le véhicule.

Le document WO 2005/038696 décrit une méthode pour ajuster la consommation de l'énergie d'un lecteur RFID dans un terminal mobile par rapport à son environnement, en utilisant un capteur de proximité.

Certaines solutions ont été proposées pour tenter de remédier à ces inconvénients, par exemple en réveillant périodiquement le lecteur RFID, afin de réduire sa consommation.

En revanche, un inconvénient de telles solutions réside dans le fait qu'il arrive que le lecteur ne soit pas actif lorsqu'un utilisateur souhaite accéder à un véhicule, l'obligeant ainsi à renouveler sa requête, en représentant sa carte à puce devant le lecteur à un moment où celui-ci est réveillé. Ainsi, l'ergonomie du système s'en trouve dégradée.

### 3. Objectifs de l'invention

L'invention a notamment pour objectif de pallier ces inconvénients de l'art antérieur.

Plus précisément, un objectif de l'invention, selon au moins un mode de réalisation, est de fournir une technique de communication en champ proche permettant d'optimiser la consommation d'énergie du lecteur de communication, tout en offrant des performances optimales en termes de service à l'utilisateur.

Un autre objectif de l'invention, selon au moins un mode de réalisation, est de fournir une telle technique à la fois simple et efficace en termes de conception, de mise en oeuvre et de maintenance.

### 4. Exposé de l'invention

L'invention propose une solution nouvelle qui ne présente pas l'ensemble de ces inconvénients de l'art antérieur, sous la forme d'un procédé de communication en champ proche, mettant en oeuvre au moins un lecteur de communication apte à échanger des données avec au moins un obj et nomade, selon la revendication 1.

Ainsi, l'invention repose sur une approche nouvelle et inventive de la communication en champ proche, permettant d'économiser l'énergie nécessaire au fonctionnement du lecteur de communication, en ne l'alimentant que lorsqu'il doit être actif pour échanger des données, au lieu de l'alimenter en permanence comme dans les techniques existantes de l'art antérieur.

Pour ce faire, l'invention prévoit d'activer l'alimentation du lecteur de communication uniquement lorsqu'une présence est détectée à proximité du lecteur de communication, rendant celui-ci actif et apte à fonctionner comme prévu.

Selon un mode de réalisation particulier, l'étape de détection détecte la présence d'un des objets nomades.

Ainsi, lorsqu'un objet nomade, par exemple une carte à puce, est présenté au lecteur de communication, pour échanger des données, la présence de cet objet est détectée et l'alimentation du lecteur de communication est activée. Le lecteur de communication est alors apte à fonctionner et à lire les données de l'objet nomade, afin d'effectuer le traitement prévu.

Selon un aspect particulier de l'invention, la détection d'une présence est mise en oeuvre par un capteur de proximité.

En effet, un tel capteur de proximité fonctionne sur de brèves impulsions de quelques microsecondes, une à dix fois par seconde et a ainsi pour avantage de consommer seulement quelques dizaines de micro ampères soit donc jusqu'à environ mille fois moins qu'un lecteur de communication alimenté en permanence.

Par exemple, un tel capteur de proximité est un capteur de proximité optique.

Ainsi, un tel capteur peut fonctionner de manière optimale même à travers une vitre d'une voiture ou d'un distributeur, et même en présence d'eau sur la vitre, ou en présence de fortes intempéries, ce qui n'est pas le cas pour un capteur de proximité de type capacitif.

Selon une caractéristique particulière de l'invention, le capteur de proximité est intégré dans le lecteur de communication, de façon à offrir un système compact.

De cette manière, toute présence à proximité du lecteur de communication est détectée par le capteur de proximité intégré, en particulier la présence d'un objet nomade destiné à communiquer des données au lecteur de communication.

Le capteur de proximité peut également être installé à côté du lecteur de communication.

En particulier, un tel lecteur de communication est un lecteur du type appartenant au groupe comprenant :
- un lecteur RFID ;
- un lecteur NFC ;
- toute autre technique de communication en champ proche.

Selon un mode de réalisation de l'invention, le procédé comprend également une étape de désactivation de l'alimentation du lecteur de communication selon un critère prédéterminé.

Ainsi, l'invention prévoit de désactiver l'alimentation du lecteur de communication, de façon à ce qu'il ne consomme plus d'énergie lorsqu'il est en attente de lecture de données d'un objet nomade par exemple.

Cette désactivation dépend d'un ou plusieurs critères, dépendants par exemple des objectifs recherchés en terme de performances du système, et/ou de la complexité de mise en oeuvre souhaitée.

Par exemple, le critère prédéterminé appartient au groupe comprenant :
- une durée prédéfinie ;
- un état inactif dudit lecteur de communication.

Ainsi, dans un premier cas, l'alimentation du lecteur est désactivée à l'expiration d'une durée prédéfinie, après son activation. Par exemple, on peut prévoir d'éteindre l'alimentation du lecteur de communication une minute après son activation, considérant que le lecteur de communication a le temps, pendant cette durée, d'effectuer toutes les actions requises (lecture des données de l'objet nomade présenté, prise en considération de ces données lues pour, par exemple, valider la location d'un véhicule et déverrouiller le véhicule, ou valider l'achat d'un objet proposé dans un distributeur et déverrouiller une porte du distributeur, ou encore vérifier le droit d'accès du porteur de l'objet nomade à une zone sécurisée, et déverrouiller une barrière d'accès à la zone sécurisée ...).

Dans un autre cas, l'alimentation du lecteur est désactivée lorsque le lecteur de communication se trouve à nouveau dans un état inactif. Par exemple, un état inactif du lecteur de communication correspond à un état dans lequel le lecteur est en attente de lecture d'un signal de communication en champ proche en provenance d'un objet nomade, par opposition à un état actif dans lequel le lecteur de communication est soit en cours d'échange de données avec un objet nomade, soit en cours de traitement de ces données lues...

Dans ce cas, on détecte que le lecteur de communication n'est plus actif, avant d'en éteindre l'alimentation.

Selon un mode de réalisation de l'invention, ledit accès en libre service appartient au groupe comprenant :
- un accès à un véhicule ;
- un accès à un objet disponible dans un distributeur ;
- un accès à une zone géographique sécurisée.

Un autre aspect de l'invention concerne un dispositif de communication en champ proche, mettant en oeuvre au moins un lecteur de communication apte à échanger des données avec au moins un objet nomade, selon la revendication 9.

Ce dispositif pourra bien sûr comporter les différentes caractéristiques relatives au procédé de communication en champ proche selon l'invention. Ainsi, les caractéristiques et avantages de ce dispositif sont les mêmes que ceux du procédé de communication en champ proche. Par conséquent, ils ne sont pas détaillés plus amplement.

Un autre aspect de l'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications 1 à 8.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un exemple de système dans lequel est mis en oeuvre le procédé de communication en champ proche selon un mode de réalisation de l'invention ;
- la figure 2 présente les principales étapes du procédé de communication en champ proche selon un mode de réalisation de l'invention ;
- la figure 3 présente la structure d'un dispositif de communication en champ proche selon un mode de réalisation particulier de l'invention.

### 6. Description d'un mode de réalisation de l'invention

### 6.1 Principe général

Le principe général de l'invention repose sur l'activation ponctuelle de l'alimentation d'un lecteur de communication en champ proche, aux moments où le lecteur doit être actif, de façon à économiser l'énergie consommée par le lecteur, en particulier lorsqu'il est en attente de lecture.

Ainsi, selon l'invention, l'alimentation du lecteur de communication est activée sur détection d'une présence à proximité du lecteur, c'est-à-dire uniquement lorsque le lecteur de communication est potentiellement sollicité pour échanger des données avec un objet nomade, tel qu'une carte à puce par exemple.

De cette manière, lorsque le lecteur de communication est en attente de lecture, ou d'échange, de données, son alimentation est éteinte et par conséquent il ne consomme pas d'énergie, et lorsqu'il doit être apte à échanger des données, c'est-à-dire lorsqu'il doit être en mode actif, alors son alimentation est activée.

L'invention prévoit donc également d'éteindre l'alimentation du lecteur de communication lorsqu'il se retrouve à nouveau dans un état d'attente de lecture, après une période d'activité.

### 6.2 Description d'un mode de réalisation

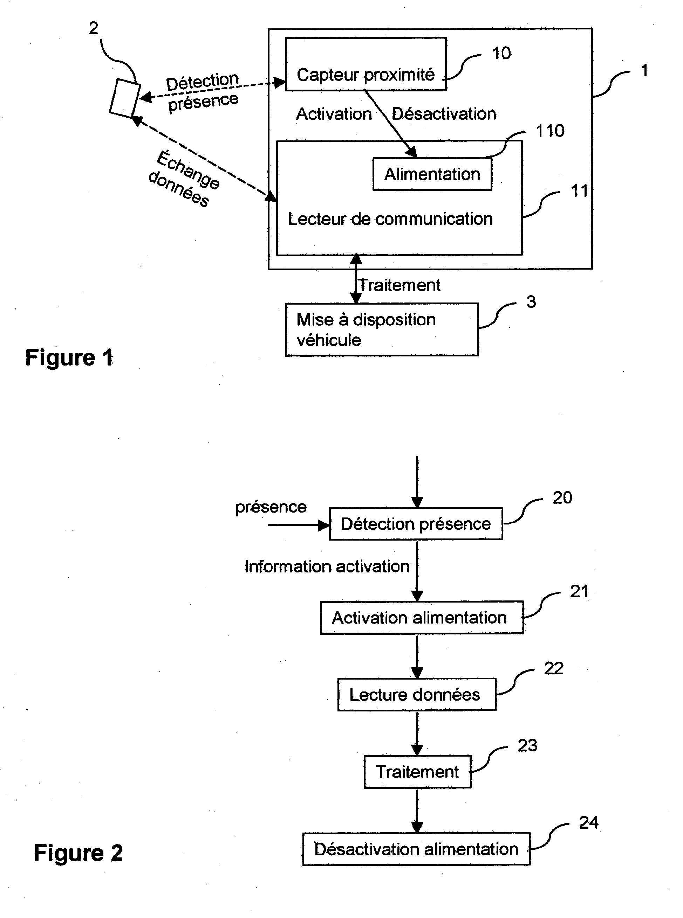

On présente, en relation avec la figure 1, un exemple de système mettant en oeuvre le procédé de communication en champ proche selon un mode de réalisation de l'invention.

On considère par exemple un service de partage de véhicules, permettant à des usagers autorisés, par exemple abonnés au service, de louer un véhicule stationné sur un parking, ou dans un garage, par l'intermédiaire d'une carte à puce contenant des données à échanger avec un lecteur de communication en champ proche, de type RFID par exemple, situé sur ou dans les véhicules à louer.

Un tel système comprend par exemple un dispositif de communication 1 selon ce mode de réalisation de l'invention, comprenant un capteur de proximité 10 et un lecteur de communication 11.

Selon ce mode de réalisation de l'invention, l'alimentation 110 du lecteur de communication est pilotée, ou contrôlée, par le capteur de proximité 10, c'est-à-dire éteinte ou allumée via une information d'activation (par exemple sous la forme d'une interruption) ou de désactivation transmise par le capteur de proximité 10.

On connaît des capteurs de proximité de plusieurs types, capacitifs ou optiques par exemple.

Dans le mode de réalisation de l'invention illustré en figure 1, le dispositif de communication comprend par exemple un capteur optique de type infrarouge. En effet, ce type de capteur est avantageusement choisi pour ses performances de détection de présence, même lorsque les conditions ne sont pas optimales (capteur derrière un pare-brise sur lequel ruisselle de l'eau par exemple) et sa faible consommation d'énergie.

Par exemple, le capteur de proximité infrarouge, ou capteur photoélectrique, comprend un émetteur de lumière associé à un récepteur. La détection de la présence d'un obj et 2 à proximité se fait par coupure ou variation d'un faisceau lumineux.

Un tel objet 2, encore appelé objet nomade, est par exemple une carte à puce contenant des données permettant à un usager d'utiliser le service de partage de véhicules. Ces données sont par exemple les coordonnées de l'usager, les références de son abonnement, un état de son crédit disponible, etc.

Ainsi, comme décrit ci-dessous en relation avec la figure 2, lorsque la présence de l'objet 2 est détectée par le capteur de proximité 10, celui-ci déclenche une interruption (information d'activation ou signal de réveil) qui active l'alimentation 110 du lecteur de communication 11, lequel entre dans un état actif et est apte à échanger des données avec l'objet 2.

Le lecteur de communication 11 traite alors ces données et communique par exemple avec un module 3 de mise à disposition d'un véhicule, encore appelé contrôleur externe, lequel gère par exemple le verrouillage et le déverrouillage du véhicule, l'autorisation de démarrer le véhicule, etc.

Le mode de réalisation décrit ci-dessus prévoit que le capteur de proximité 10 et le lecteur de communication 11 soient intégrés dans un dispositif de communication 1, mais il est également envisageable, dans d'autres modes de réalisation, que ces deux éléments soient indépendants et installés proches l'un de l'autre.

Selon un mode de réalisation de l'invention, ledit lecteur de communication est situé dans ou sur le véhicule.

Ainsi, l'invention permet à l'usager de sélectionner le véhicule qu'il souhaite utiliser, simplement en s'approchant de ce véhicule.

Dans un autre mode de réalisation de l'invention, où un même dispositif commande l'accès à plusieurs véhicules (par exemple une borne, ou distributeur, située dans un parking), le dispositif peut donner accès à un des véhicules disponibles qu'il contrôle (en délivrant par exemple un ticket indiquant l'emplacement du véhicule dans le parking, accompagné d'une clé ou d'un code d'accès au véhicule). Ce mode de réalisation offre l'avantage de nécessiter un nombre plus restreint de dispositifs de communication pour un même parc de véhicules et donc de permettre des économies d'échelle (une seule borne pour l'accès à plusieurs véhicules, au lieu d'un dispositif pour chaque véhicule).

On présente maintenant, en relation avec la figure 2, les principales étapes du procédé mis en oeuvre dans un système tel qu'illustré en figure 1 et décrit ci-dessus.

Une première étape 20 de détection de présence est mise en oeuvre par le capteur de proximité 10. Cette première étape permet notamment de détecter la présence d'un objet nomade présenté par un usager au lecteur de communication, en vue de bénéficier du service associé, par exemple la location d'un véhicule en libre-service.

Sur détection d'une présence lors de l'étape 20, une information d'activation est émise, par exemple sous la forme d'une interruption (signal de réveil), à destination de l'alimentation 110 du lecteur de communication 11, de façon à l'activer, lors d'une étape 21 d'activation de l'alimentation.

L'activation de l'alimentation 110 du lecteur de communication 11 permet de placer celui-ci dans un état actif, c'est-à-dire apte à échanger des données avec un objet nomade dont la présence aurait été détectée.

Par exemple, dans le cas du service de location de véhicule en libre-service, lorsqu'un usager présente sa carte d'abonnement à proximité du lecteur de communication, la présence de la carte est détectée par le capteur de proximité, qui active l'alimentation du lecteur de communication, lequel alors apte à lire les données, lors d'une étape 22 de lecture de données, de la carte à puce de l'usager.

A la suite de cette étape 22, une étape 23 de traitement des données lues est mise en oeuvre, permettant ainsi de satisfaire la requête de l'usager, si toutes les conditions sont vérifiées.

Par exemple, l'étape de traitement 23 consiste à vérifier la validité de l'abonnement, le crédit disponible pour l'usager, etc.

L'étape de traitement 23 peut également consister à déverrouiller le véhicule si l'usager est autorisé, à autoriser le démarrage, etc.

Enfin, l'étape de traitement 23 peut également consister à mettre à jour les données présentes sur la carte à puce de l'usager, par exemple en décrémentant le crédit disponible pour tenir compte de la location en cours, etc.

Une dernière étape 24 de désactivation de l'alimentation est mise en oeuvre, de façon à éteindre l'alimentation du lecteur de communication afin qu'il ne consomme pas d'énergie lorsqu'il est en attente de lecture.

Cette étape 24 peut être mise en oeuvre selon un ou plusieurs critères.

Par exemple, elle peut être mise en oeuvre à l'expiration d'une durée prédéfinie, choisie en fonction du temps estimé des étapes précédentes 22 et 23. Ainsi, si l'on considère que la lecture et le traitement des données par le lecteur de communication dure quelques secondes, par exemple 5 secondes, alors la désactivation de l'alimentation est mise en oeuvre par exemple au bout de 6 secondes après sa dernière activation.

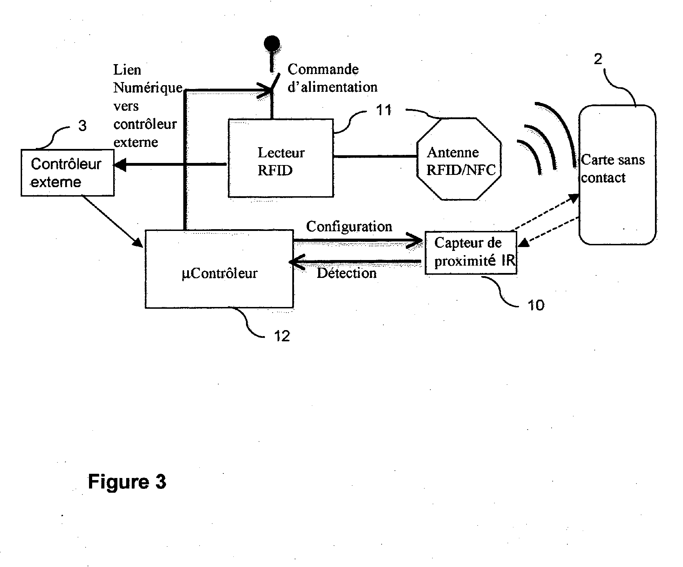

Selon un autre exemple, une information de l'état du lecteur de communication est connue du contrôleur externe 3, permettant de savoir quand le lecteur de communication est à nouveau inactif, c'est-à-dire ni en cours de lecture des données, ni en cours de traitement de ces données lues. Dans ce cas, lorsque le contrôleur externe 3 sait que le lecteur de communication est inactif, le contrôleur externe 3 envoie une commande permettant de désactiver l'alimentation du lecteur de communication et de la maintenir éteinte jusqu'à détection d'une présence. Cette variante est décrite plus en détails en relation avec la figure 3

Ainsi, selon ce mode de réalisation de l'invention, la consommation du lecteur de communication est réduite aux périodes (de l'ordre de quelques secondes) où il est effectivement actif, c'est-à-dire sollicité pour échanger des données avec un objet nomade et ainsi permettre à un usager de bénéficier du service requis.

Par exemple, si on estime à 1ms le temps de traitement associé à l'étape d'activation, à 800ms la durée de l'étape de lecture des données, et à 500 ms le temps de traitement des données lues, on parvient à un temps d'activation du dispositif de l'ordre de 1,3 s à chaque détection d'un objet nomade.

En dehors de cette période d'échange avec l'objet nomade (pendant laquelle la consommation du dispositif est forte du fait de l'activation du lecteur de communication), seul le capteur infrarouge consomme de l'énergie et sa consommation est très basse.

De plus, la présentation d'un objet nomade ne survient effectivement que de temps en temps dans une journée, dans le cas par exemple de la location automatique de véhicules (voitures, vélos ...) ou, dans un autre mode de réalisation, d'un contrôle d'accès.

De ce fait, la consommation moyenne du dispositif de communication, comprenant le capteur de proximité, qui consomme très peu d'énergie du fait de son fonctionnement par brève impulsions, et le lecteur de communication ne consommant de l'énergie que ponctuellement lorsqu'il est sollicité, est donc très faible, et très fortement réduite par rapport aux techniques de l'art antérieur, tout en offrant le même service aux usagers.

La qualité du service rendu est donc optimale, tout en assurant des coûts de maintenance du système faibles car la consommation d'énergie du lecteur de communication ne participe que très peu à la décharge des batteries du système.

### 6.3 Variante de l'invention

Le principe de l'invention, présentée de façon détaillée en lien avec une autorisation d'accès à un véhicule, peut également être utilisé pour contrôler l'accès à une zone géographique particulière, par exemple une zone sécurisée située en extérieur, ou dans un lieu non relié à un réseau électrique, par exemple une entrée d'un chantier de construction, d'un lieu d'événement temporaire comme une foire exposition ou un concert.

### 6.4 Structure d'un dispositif de communication en champ proche

On présente maintenant, en relation avec la figure 3, un exemple de structure d'un dispositif de communication en champ proche, selon un mode de réalisation de l'invention.

On considère, comme dans la figure 1, un lecteur de communication 11 comprenant un lecteur RFID, présentant classiquement une forte consommation, et une antenne associée, une carte sans contact 2 et un capteur de proximité InfraRouge 10, de basse consommation.

Les performances du capteur infra rouge sont choisies de façon à permettre un bon fonctionnement de la détection, par exemple à minimiser les fausses détections et/ou à maximaliser le taux de détection des objets nomades cibles. Ceci peut par exemple être atteint avec un capteur infra rouge utilisant une longueur d'onde de l'ordre de 850nm, et générant des impulsions (ou pulses selon la terminologie anglo-saxonne) de 100us à 110mA d'amplitude, avec une fréquence de veille entre 2 impulsions inférieure à 800ms.

La consommation maximale de l'étage de détection ne doit pas dépasser 140uA.

Selon le mode de réalisation décrit en figure 3, lorsque le capteur de proximité 10 détecte une présence, une information de détection est transmise par le capteur de proximité 10 à un µcontrôleur 12, lequel se charge ensuite de commander l'alimentation du lecteur de communication 11. Ce µcontrôleur 12 est également apte à configurer le capteur de proximité, selon des critères prédéterminés (sensibilité de détection de présence, réglage de certains paramètres, ...).

Par ailleurs, selon ce mode de réalisation, le lecteur de communication est relié à un contrôleur externe 3, encore appelé module de mise à disposition d'un véhicule (figure 1), via un lien numérique.

Par ailleurs, selon un mode de réalisation de l'invention, le contrôleur externe 3 est également apte à prendre la décision de désactivation de l'alimentation du lecteur de communication 11, car il a connaissance de l'intégralité de la transaction, c'est-à-dire du retour à l'état inactif du lecteur de communication 11. Dans ce cas, le contrôleur externe 3 lève alors une commande sur le µcontrôleur 12 qui pilote l'alimentation du lecteur de communication 11 pour l'éteindre, ou la mettre dans un état « OFF ».

## Revendications

1. Procédé de communication en champ proche, mettant en oeuvre au moins un lecteur de communication (11) apte à échanger des données avec au moins un objet nomade (2), **caractérisé en ce qu'**il comprend :
- une étape de détection (20) d'une présence, par un capteur de proximité (10), à proximité dudit lecteur de communication (11), délivrant une information d'activation, lorsqu'une présence est détectée ;
- une étape d'activation (21) de l'alimentation (110) dudit lecteur de communication, (11) à réception de ladite information d'activation,
- une étape d'échange de données avec ledit au moins un objet nomade (2),
- une étape d'autorisation d'un accès en libre-service en fonction d'au moins une desdites données échangées, ledit accès en libre service appartenant au groupe comprenant :
- un accès à un véhicule ;
- un accès à un objet disponible dans un distributeur ;
- un accès à une zone géographique sécurisée.

2. Procédé de communication en champ proche selon la revendication 1, **caractérisé en ce que** ladite étape de détection détecte la présence d'un desdits objets nomades.

3. Procédé de communication en champ proche selon la revendication 1, **caractérisé en ce que** ledit capteur de proximité est un capteur de proximité optique.

4. Procédé de communication en champ proche selon la revendication 1, **caractérisé en ce que** ledit capteur de proximité est intégré dans ledit lecteur de communication.

5. Procédé de communication en champ proche selon la revendication 1, **caractérisé en ce que** ledit lecteur de communication est un lecteur du type appartenant au groupe comprenant :
- un lecteur RFID ;
- un contrôleur NFC.

6. Procédé de communication en champ proche selon la revendication 1, **caractérisé en ce qu'**il comprend également une étape de désactivation (24) de ladite alimentation dudit lecteur de communication selon un critère prédéterminé.

7. Procédé de communication en champ proche selon la revendication 6, **caractérisé en ce que** ledit critère prédéterminé appartient au groupe comprenant :
- une durée prédéfinie ;
- un état inactif dudit lecteur de communication.

8. Procédé de communication en champ proche selon la revendication 7, **caractérisé en ce que** ledit état inactif dudit lecteur de communication correspond à un état dans lequel le lecteur est en attente de lecture d'un signal de communication en champ proche en provenance d'un desdits objets nomades.

9. Dispositif de communication en champ proche, mettant en oeuvre au moins un lecteur de communication apte à échanger des données avec au moins un objet nomade, **caractérisé en ce qu'**il comprend :
- des moyens de détection d'une présence, par un capteur de proximité (10), à proximité dudit lecteur de communication, délivrant une information d'activation, lorsqu'une présence est détectée ;
- des moyens d'activation de l'alimentation dudit lecteur de communication, à réception de ladite information d'activation,
- des moyens d'échange de données avec ledit au moins un objet nomade (2),
- des moyens d'autorisation d'un accès en libre-service en fonction d'au moins une desdites données échangées, ledit accès en libre service appartenant au groupe comprenant :
- un accès à un véhicule ;
- un accès à un objet disponible dans un distributeur ;
- un accès à une zone géographique sécurisée.

10. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de communication en champ proche selon l'une au moins des revendications 1 à 8.

## Patentansprüche

1. Nahfeldkommunikationsverfahren, das mindestens ein Kommunikationslesegerät (11) einsetzt, das zum Datenaustausch mit mindestens einem Nomadenobjekt (2) geeignet ist, **dadurch gekennzeichnet, dass** es umfasst:
- einen Schritt der Anwesenheitserfassung (20) durch einen Näherungsfühler (10) in der Nähe des Kommunikationslesegeräts (11), der eine Aktivierungsinformation liefert, wenn eine Anwesenheit erfasst wird;
- einen Schritt (21) der Aktivierung der Versorgung (110) des Kommunikationslesegeräts (11) bei Erhalt der Aktivierungsinformation,
- einen Datenaustauschschritt mit dem mindestens einen Nomadenobjekt (2),
- einen Autorisierungsschritt eines Selbstbedienungszugangs in Abhängigkeit von mindestens einem der ausgetauschten Daten, wobei der Selbstbedienungszugang der Gruppe umfassend:
- einen Zugang zu einem Fahrzeug;
- einen Zugang zu einem in einem Verteiler verfügbaren Objekt;
- einen Zugang zu einer gesicherten geografischen Zone
angehört.

2. Nahfeldkommunikationsverfahren nach Anspruch 1, **dadurch gekennzeichnet, dass** der Erfassungsschritt die Anwesenheit eines der Nomadenobjekte erfasst.

3. Nahfeldkommunikationsverfahren nach Anspruch 1, **dadurch gekennzeichnet, dass** der Näherungsfühler ein optischer Näherungsfühler ist.

4. Nahfeldkommunikationsverfahren nach Anspruch 1, **dadurch gekennzeichnet, dass** der Näherungsfühler in das Kommunikationslesegerät integriert ist.

5. Nahfeldkommunikationsverfahren nach Anspruch 1, **dadurch gekennzeichnet, dass** das Kommunikationslesegerät ein Lesegerät des Typs ist, der der Gruppe umfassend:
- einen RFID-Leser;
- einen NFC-Kontroller
angehört.

6. Nahfeldkommunikationsverfahren nach Anspruch 1, **dadurch gekennzeichnet, dass** es auch einen Deaktivierungsschritt (24) der Versorgung des Kommunikationslesegeräts nach einem vorbestimmten Kriterium umfasst.

7. Nahfeldkommunikationsverfahren nach Anspruch 6, **dadurch gekennzeichnet, dass** das vorbestimmte Kriterium der Gruppe umfassend:
- eine vordefinierte Dauer;
- einen inaktiven Zustand des Kommunikationslesegeräts
angehört.

8. Nahfeldkommunikationsverfahren nach Anspruch 7, **dadurch gekennzeichnet, dass** der inaktive Zustand des Kommunikationslesegeräts einem Zustand entspricht, in dem das Lesegerät auf das Ablesen eines von einem der Nomadenobjekte stammenden Nahfeldkommunikationssignals wartet.

9. Nahfeldkommunikationsvorrichtung, die mindestens ein Kommunikationslesegerät einsetzt, das zum Datenaustausch mit mindestens einem Nomadenobjekt (2) geeignet ist, **dadurch gekennzeichnet, dass** es umfasst:
- Mittel zur Anwesenheitserfassung durch einen Näherungsfühler (10) in der Nähe des Kommunikationslesegeräts, die eine Aktivierungsinformation liefern, wenn eine Anwesenheit erfasst wird;
- Aktivierungsmittel der Versorgung des Kommunikationslesegeräts bei Erhalt der Aktivierungsinformation,
- Datenaustauschmittel mit dem mindestens einen Nomadenobjekt (2),
- Autorisierungsmittel eines Selbstbedienungszugangs in Abhängigkeit von mindestens einem der ausgetauschten Daten, wobei der Selbstbedienungszugang der Gruppe, umfassend:
- einen Zugang zu einem Fahrzeug;
- einen Zugang zu einem in einem Verteiler verfügbaren Objekt;
- einen Zugang zu einer gesicherten geografischen Zone
angehört.

10. Computerprogrammprodukt, das von einem Kommunikationsnetz herunterladbar ist und/oder auf einem von einem Computer lesbaren Träger aufgezeichnet ist und/oder von einem Prozessor ausführbar ist, **dadurch gekennzeichnet, dass** es Programmcodeinstruktionen für den Einsatz des Nahfeldkommunikationsverfahrens nach mindestens einem der Ansprüche 1 bis 8 umfasst.

## Claims

1. A near field communication method, implementing at least one communication reader (11) configured to exchange data with at least one nomadic object (2), **characterised in that** it comprises:
- a step of detecting (20) a presence, by a proximity sensor (10), in the vicinity of said communication reader (11), delivering activation information, when a presence is detected; and
- a step of activating (21) a power supply (110) of said communication reader (11), upon reception of said activation information;
- a step of exchanging data with said at least one nomadic object (2);
- a step of authorising a self-service access according to at least one of said data exchanged, said self-service access belonging to the group comprising:
- an access to a vehicle;
- an access to an object available in a distributor;
- an access to a secure geographical zone.

2. The near field communication method according to claim 1, wherein detecting detects the presence of one of said nomadic objects.

3. The near field communication method according to claim 1, wherein said proximity sensor comprises an optical proximity sensor.

4. The near field communication method according to claim 1, wherein said proximity sensor is incorporated into said communication reader.

5. The near field communication method according to claim 1, wherein said communication reader comprises a reader of the type belonging to the group comprising:
- an RFID reader;
- an NFC controller.

6. The near field communication method according to claim 1, wherein the method further comprises a step of deactivating (24) said power supply of said communication reader according to a predetermined criterion.

7. The near field communication method according to claim 6, wherein said predetermined criterion belongs to the group comprising:
- a predefined duration;
- an inactive state of said communication reader.

8. The near field communication method according to claim 7, wherein said inactive state of said communication reader corresponds to a state wherein the reader is waiting for reading a near field communication signal from one of said nomadic objects.

9. A near field communication device, implementing at least one communication reader able to exchange data with at least one nomadic object, **characterised in that** it comprises :
- means for detecting a presence, by a proximity sensor (10), in the vicinity of the communication reader, delivering activation information, when a presence is detected;
- means for activating a power supply of the communication reader, upon receiving the activation information;
- means for exchanging data with said at least one nomadic object (2);
- means for authorising a self-service access according to at least one of said data exchanged, said self-service access belonging to the group comprising:
- an access to a vehicle;
- an access to an object available in a distributor;
- an access to a secure geographical zone.

10. A computer program product that can be downloaded from a communications network and/or recorded on a support that can be read by a computer and/or that can be executed by a processor, **characterised in that** it comprises program code instructions for implementing a method of near field communication according to at least one of claims 1 to 8.
